# EUROPÄISCHE PATENTSCHRIFT

(11) **EP 2 648 298 B1**
(45) Veröffentlichungstag und Bekanntmachung des Hinweises auf die Patenterteilung: **25.11.2015**
(21) Anmeldenummer: 12163376.2
(22) Anmeldetag: 05.04.2012
(51) Int. Cl.: H02G 7/06

(54) **Freileitungseinrichtung, insbesondere für Hochspannungsfreileitungen**
Overhead line device, in particular for high voltage overhead lines
Installation de ligne aérienne, notamment pour lignes aériennes à haute tension

(43) Veröffentlichungstag der Anmeldung: 09.10.2013
(73) Patentinhaber: SAG GmbH, 63225 Langen (DE)
(72) Erfinder: Pohlmann, Heinrich, 64390 Erzhausen (DE)
(74) Vertreter: Rohmann, Michael

(56) Entgegenhaltungen:
- EP-A1- 0 691 719
- FR-A- 627 645
- FR-A1- 2 225 861

## Beschreibung

Die Erfindung betrifft eine Freileitungseinrichtung, insbesondere für Hochspannüngsfreileitungen - mit einer Mehrzahl von Masten und mit zwischen den Masten verlaufenden und an den Masten fixierten Leiterseilen. Bei den Leiterseilen handelt es sich insbesondere um Phasenseile eines Drehstromsystems.

Freileitungseinrichtungen der vorstehend beschriebenen Art sind aus der Praxis in unterschiedlichen Ausführungsformen bekannt. Die Abstände der Maste betragen in Abhängigkeit von den jeweiligen Bedingungen normalerweise 300 bis 600 m. Die zwischen den Masten verlaufenden und an den Masten fixierten Leiterseile haben zwischen zwei Masten in der Regel einen verhältnismäßig : großen Durchhang. Durchhang meint dabei den maximalen Abstand des Leiterseiles von einer durch die Aufhängungspunkte verlaufenden gedachten Linie bzw. Geraden. Die Leiterseile können auch nicht stramm gespannt werden, weil sie temperaturabhängigen Zugspannungen unterliegen. Weiterhin müssen übereinander angeordnete Leiterseile einen relativ großen Abstand voneinander aufweisen. Im Betrieb können sich die Leiterseile nämlich bis auf zu beispielsweise 80 °C erwärmen und dann vergrößert sich ihr Durchhang deutlich. Das kann bei zu geringen Abständen zu einer gegenseitigen Störung bzw. Berührung der Leiterseile führen. Wegen der einzuhaltenden relativ großen Abstände zwischen übereinander angeordneten Leiterseilen müssen auch die Maste entsprechend hoch ausgeführt sein. Das vor allem auch deshalb, weil ein vorgeschriebener Mindestbodenabstand zwischen dem untersten Leiterseil und dem Erdboden eingehalten werden muss.

Der Erfindung liegt das technische Problem zugrunde, eine Freileitungseinrichtung der eingangs genannten Art anzugeben, bei der die vorstehend beschriebenen Nachteile vermieden werden und bei der insbesondere der Durchhang der Leiterseile deutlich verringert werden kann.

Zur Lösung dieses technischen Problems lehrt die Erfindung eine Freileitungseinrichtung, insbesondere für Hochspannungsfreiteitungen, - mit einer Mehrzahl von Masten und mit zwischen den Masten verlaufenden und an den Masten fixierten Leiterseilen, wie im FR 627645 A,
wobei zumindest ein zwischen den Masten verlaufendes und an den Masten fixiertes Stabilisierungsseil vorgesehen ist, wobei das Stabilisierungsseil oberhalb zumindest eines Teils der Leiterseile angeordnet ist,
wobei zumindest ein Leiterseil in den Bereichen zwischen zwei Masten jeweils an einer Mehrzahl von Aufhängungspunkten an dem Stabilisierungsseil - den Durchhang der Leiterseile reduzierend - aufgehängt ist und
wobei das Stabilisierungsseil und das zumindest eine Leiterseil das gleiche oder im Wesentlichen das gleiche elektrische Potential aufweisen.

Erfindungsgemäß wird ein Leiterseil im Bereich zwischen zwei Masten an einer Mehrzahl bzw. an einer Vielzahl von Aufhängungspunkten an dem Stabilisierungsseil gleichsam girlandenartig aufgehängt. Dadurch lässt sich der Durchhang eines Leiterseils erheblich reduzieren. Der Erfindung liegt insoweit die Erkenntnis zugrunde, dass die Aufhängung an einer Mehrzahl von mit verhältnismäßig geringen Abständen zueinander angeordneten Aufhängungspunkten problemlos möglich ist, wenn erfindungsgemäß das aufgehängte Leiterseil und das entsprechende Stabilisierungsseil das gleiche elektrische Potential bzw. im Wesentlichen das gleiche elektrische Potential aufweisen.

Dass der Durchhang der Leiterseile reduziert wird, meint im Rahmen der Erfindung, dass der Durchhang nach der erfindungsgemäßen Aufhängung geringer bzw. deutlich geringer ist als der Durchhang der Leiterseile ohne die erfindungsgemäßen Aufhängungsmaßnahmen. Wie oben bereits erwähnt, meint Durchhang den maximalen Abstand des Leiterseils von einer durch zwei Aufhängungspunkte des Leiterseils bzw. durch zwei benachbarte Aufhängungspunkte des Leiterseils gelegten gedachten Linie bzw. Geraden. Durch die erfindungsgemäße Aufhängung eines Leiterseils an einer Mehrzahl bzw. Vielzahl von Aufhängungspunkten zwischen zwei Masten wird das Leiterseil also gleichsam nach oben zum Stabilisierungsseil hin gezogen. Vorzugweise werden alle Leiterseile einer Phase der Freileitungseinrichtung an dem Stabilisierungsseil entsprechend der erfindungsgemäßen Lehre aufgehängt. - Zwischen zwei Masten ist ein Leiterseil empfohlenermaßen an zumindest fünf Aufhängungspunkten, bevorzugt an zumindest sechs Aufhängungspunkten an dem Stabilisierungsseil aufgehängt und zwar insbesondere bei einem Mastabstand von 200 bis 400 m bzw. bei einem Mastabstand von 250 bis 350 m. Bei anderen Mastabständen wird zweckmäßigerweise eine entsprechend umgerechnete Anzahl von Aufhängungspunkten gewählt. Es empfiehlt sich, dass die Abstände der Aufhängungspunkte zwischen zwei Masten konstant bzw. im Wesentlichen konstant sind. Zur Mitte des Spannfeldes können die Abstände der Aufhängungen sich auch verkürzen, um noch geringere Gesamtdurchhänge zu erzielen.

Erfindungsgemäß soll das jeweilige Stabilisierungsseil das gleiche bzw. im Wesentlichen das gleiche elektrische Potential aufweisen wie ein aufgehängtes Leiterseil bzw. wie daran aufgehängte Leiterseile bzw. Leiterseilbündel. Es soll aber zweckmäßigerweise kein bzw. quasi kein Strom durch das Stabilisierungsseil fließen oder das Stabilisierungsseil soll sich auch bei maximaler Stromübertragung nur unwesentlich, beispielsweise um eine Temperatur von 5 bis 10 K erwärmen. Zur Realisierung der Potentialgleichheit von Leiterseil bzw. Leiterseilen und Stabilisierungsseil gibt es verschiedene Möglichkeiten.

Nach einer bevorzugten Ausführungsform der Erfindung wird ein Leiterseil an einem bzw. an jedem Aufhängungspunkt mit zumindest einem Verbindungselement an dem Stabilisierungsseil aufgehängt, wobei ein solches Verbindungelement einen elektrischen Widerstand von 50 bis 200 Milliohm, vorzugsweise von 70 bis 130 Milliohm und besonders bevorzugt von 80 bis 120 Milliohm aufweist. Gemäß einer empfohlenen Ausführungsvariante hat ein solches Verbindungselement einen elektrischen Widerstand von etwa 100 Milliohm. Bei den vorstehend beschriebenen Ausführungsformen ist die Verbindung zwischen Leiterseil bzw. Leiterseilen und Stabilisierungsseil somit hochohmig aber nicht höchstohmig ausgestaltet. Übliche Leiterseile haben einen Widerstand von 150 bis 50 Milliohm/km.

Nach einer anderen Ausführungsform der Erfindung wird die Potentialgleichheit dadurch verwirklicht, dass über eine Strecke mit mehreren in Reihe hintereinander angeordneten Masten bevorzugt lediglich eine elektrische Verbindung zwischen einem Leiterseil und dem Stabilisierungsseil realisiert ist. Zweckmäßigerweise ist dann das Leiterseil an einem bzw. an jedem Aufhängungspunkt mit zumindest einem Isolator an dem Stabilisierungsseil aufgehängt ist, wobei ein solcher Isolator einen elektrischen Widerstand von 1000 Ohm bis 10.000.000 Ohm, vorzugsweise von 1000 Ohm bis 800.000 Ohm aufweist. Insoweit unterscheidet sich der zur Aufhängung verwendete Isolator dieser Ausführungsform von dem oben beschriebenen Verbindungselement, weil die Isolatoren nach dieser Ausführungsform höchstohmig ausgebildet sind. Empfohlenermaßen erfolgt die elektrische Verbindung zwischen Leiterseil und Stabilisierungsseil nach einer Mehrzahl von einfachen Tragmasten - ohne elektrische Verbindung - erst an einem Abspannmast der Freileitungseinrichtung.

Erfindungsgemäß soll ein Leiterseil bzw. sollen Leiterseile zwischen zwei Masten jeweils an einer Mehrzahl bzw. einer Vielzahl von Aufhängungspunkten an dem Stabilisierungsseil aufgehängt werden. Der Erfindung liegt dabei die Erkenntnis zugrunde, dass aufgrund der erfindungsgemäßen Merkmalskombination hier relativ geringe Abstände zwischen den Aufhängungspunkten realisiert werden können. Nach einer empfohlenen Ausführungsform der Erfindung beträgt der Abstand zwischen zwei Aufhängungspunkten eines Leiterseils 5 bis 50 m, vorzugsweise 8 bis 45 m, bevorzugt 8 bis 40 m und besonders bevorzugt 10 bis 30 m. Aufgrund dieser Mehrzahl von Aufhängungspunkten kann der Durchhang eines Leiterseils erheblich reduziert werden. Zweckmäßigerweise beträgt der Durchhang eines Leiterseils zwischen zwei Aufhängungspunkten 20 bis 70 cm, vorzugsweise 25 bis 65 cm, bevorzugt 35 bis 65 cm und besonders bevorzugt beispielsweise 50 cm. Diese Durchhangwerte beziehen sich insbesondere auf eine Temperatur des Leiterseils von 10 °C.

Es liegt im Rahmen der Erfindung, dass das Stabilisierungsseil als Stahlseil ausgebildet ist. Es liegt fernerhin im Rahmen der Erfindung, dass durch das Stabilisierungsseil kein Strom bzw. quasi kein Strom fließt. Empfohlenermaßen fließt durch das Stabilisierungsseil lediglich ein Strom mit einer maximalen Stromstärke von 0,2 bis 20 A, bevorzugt von 1 bis 10 A und sehr bevorzugt von 2 bis 5 A. Dagegen fließt durch ein Leiterseil bzw. ein Leiterseilbündel ein Strom mit einer erheblich höheren Stromstärke von bis zu 4.000 A. Es liegt im Rahmen der Erfindung, dass durch ein Leiterseil ein Strom mit einer Stromstärke fließt, die zumindest 200 mal größer ist, vorzugsweise zumindest 100 mal größer ist als die Stromstärke des durch das Stabilisierungsseil strömenden Stroms.

Nach besonders bevorzugter Ausführungsform der Erfindung ist an einem Stabilisierungsseil eine Mehrzahl von Leiterseilen aufgehängt (Bündelhalter) und sind die Leiterseile dabei übereinander und/oder nebeneinander angeordnet. Es liegt im Rahmen der Erfindung, dass die Mehrzahl von Leiterseilen an einem Aufhängungspunkt durch Abstandshalter voneinander getrennt sind bzw. auf Abstand gehalten werden.

Zweckmäßigerweise beträgt der Abstand zwischen zwei Masten 200 bis 600 m, insbesondere 250 bis 450 m. Vorzugsweise ist das Stabilisierungsseil mit einer Zugspannung von 700 bis 1.000 N/mm², bevorzugt von 800 bis 950 N/mm² gespannt. Empfohlenermaßen wird das Stabilisierungsseil möglichst stramm und flach sowie mit möglichst geringem Durchhang gespannt. Das ist bei dem Stabilisierungsseil möglich, da es im Gegensatz zu den Leiterseilen im Normalfall lediglich auf die Umgebungstemperatur erwärmt wird. Vorzugsweise beträgt der Durchmesser des Stabilisierungsseils 2 bis 10 cm, bevorzugt 2,5 bis 6 cm. Nach einer sehr empfohlenen Ausführungsform der Erfindung ist das Stabilisierungsseil das Erdseil der Freileitungseinrichtung. Bei dem Stabilisierungsseil handelt es sich dann also um ein geerdetes, elektrisch leitfähiges Seil. Grundsätzlich können zwischen zwei Mästen auch zwei oder mehr Stabilisierungsseile vorhanden bzw. gespannt sein.

Der Erfindung liegt die Erkenntnis zugrunde, dass aufgrund der erfindungsgemäßen Maßnahmen zwischen zwei Masten eine mehrfache Aufhängung eines Leiterseils an einem Stabilisierungsseil mit überraschend geringem Abstand der Aufhängungspunkte möglich ist. Dadurch kann der Durchhang der Leiterseile erheblich reduziert werden und demzufolge können auch die Abstände zwischen den einzelnen Leiterseilen viel geringer gewählt werden als bei den aus der Praxis bekannten Freileitungseinrichtungen. Unter Einhaltung des geforderten Mindestbodenabstandes kann im Vergleich zu den bekannten Masten von Freileitungseinrichtungen auch die Masthöhe deutlich geringer gehalten werden. Dadurch fällt der Mast im Landschaftsbild weniger auf und somit wird das Landschaftsbild auch weniger verunstaltet. Die erfindungsgemäße Freileitungseinrichtung kann auf verhältnismäßig einfache und wenig aufwendige Weise verwirklicht werden und die erfindungsgemäßen Maßnahmen sind auch relativ kostengünstig realisierbar.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht einer erfindungsgemäßen Freileitungseinrichtung,
- Fig. 2: einen Schnitt A-A durch den Gegenstand gemäß Fig. 1 und
- Fig. 3: den Gegenstand nach Fig. 2 in einer weiteren Ausführungsform.

Die Figuren zeigen eine erfindungsgemäße Freileitungseinrichtung für Hochspannungsfreileitungeh mit einer Mehrzahl von Masten 1 und mit zwischen den Masten 1 verlaufenden und an den Masten 1 fixierten Leiterseilen 2. Die Leiterseile 2 sind mit Hilfe Isolatorelementen 8 an den Masten 1 fixiert bzw. aufgehängt. Die Freileitungseinrichtung weist weiterhin zumindest ein zwischen den Masten 1 verlaufendes und an den Masten 1 fixiertes Stabilisierungsseil 3 auf. Im Ausführungsbeispiel nach den Figuren ist lediglich ein Stabilisierungsseil 3 vorgesehen. Grundsätzlich könnten aber auch mehrere Stabilisierungsseile 3 eingesetzt werden. Zweckmäßigerweise und im Ausführungsbeispiel ist das Stabilisierungsseil 3 zugleich das Erdseil der Freileitungseinrichtung. Empfohlenermaßen handelt es sich bei dem Stabilisierungsseil 3 um ein Stahlseil. In den Figuren ist erkennbar, dass das Stabilisierungsseil 3 oberhalb der Leiterseile 2 angeordnet ist.

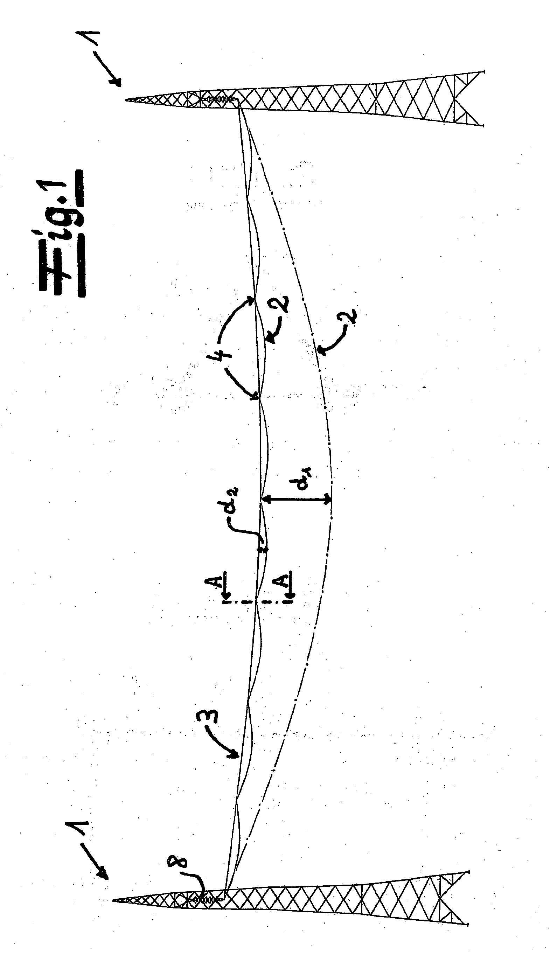

In der Fig. 1 ist strichpunktiert ein nach dem Stand der Technik zwischen zwei Masten 1 aufgehängtes Leiterseil 2 angedeutet. Das Leiterseil 2 weist hier einen relativ großen Durchhang d₁ (bzw. d₁+ Durchhang Stabilisierungsseil 3) auf. Dieser Durchhang vergrößert sich noch, wenn das Leiterseil 2 sich im Betrieb auf höhere Temperaturen von beispielsweise 80 °C aufheizt. Das ist jedoch in der Fig. 1 nicht dargestellt worden.

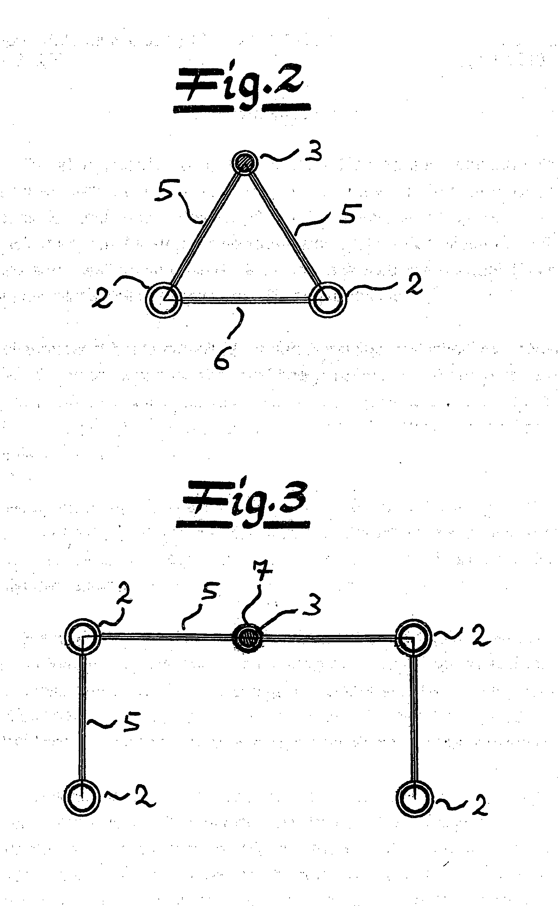

Erfindungsgemäß weist das Stabilisierungsseil 3 das gleiche bzw. im Wesentlichen das gleiche elektrische Potential auf wie das Leiterseil 2 bzw. wie die Leiterseile 2. Das wird beispielsweise dadurch realisiert, dass das Leiterseil 2 an Aufhängungspunkten 4 über hochohmige Verbindungselemente an dem Stabilisierungsseil 3 aufgehängt ist. Ein solches hochohmiges - aber nicht höchstohmiges - Verbindungselement weist beispielsweise einen Widerstand von 100 Millohm auf. Aufgrund der erfindungsgemäßen Merkmalskombiriation ist es problemlos möglich, ein Leiterseil 2 zwischen zwei Masten 1 an einer Mehrzahl von Aufhängungspunkten 4 an dem Stabilisierungsseil 3 aufzuhängen (Fig. 1). Dadurch ergibt sich ein girlandenartiges Aufhängen eines Leiterseils 2. Obwohl in der Fig. 1 lediglich die girlandenförmige Aufhängung eines Leiterseils 2 gezeigt ist, können an einem Stabilisierungsseil 3 auch mehrere Leiterseile 2 in dieser Weise aufgehängt werden (siehe Fig. 2 und 3).

In Fig. 1 ist weiterhin erkennbar, dass der Durchhang d₂ eines erfindungsgemäß aufgehängten Leiterseils 2 gegenüber dem Durchhang d₁ eines nach dem Stand der Technik aufgehängten Leiterseils 2 erheblich reduziert ist. Bei einem Mastabstand von 300 m beträgt der Abstand zwischen zwei Aufhängungspunkten 4 eines Leiterseils 2 vorzugsweise 10 bis 30 m. Der Durchhang d₂ eines erfindungsgemäß aufgehängten Leiterseils 2 beträgt vorzugsweise 35 bis 65 cm, beispielsweise 50 cm. Diese Durchhangswerte beziehen sich dabei insbesondere auf eine Temperatur des Leiterseils von 10 °C.

Im Ausführungsbeispiel gemäß Fig. 2 ist die Aufhängung zweier Leiterseile 2 an einem Stabilisierungsseil 3 dargestellt. Die Aufhängung erfolgt hier jeweils über hochohmige Verbindungselemente 5, die beispielsweise einen Widerstand von 100 Ohm aufweisen. Außerdem ist zwischen den beiden Leiterseilen 2 ein Abstandshalter 6 vorgesehen. - In der Fig. 3 ist die Aufhängung von vier Leiterseilen 2 an einem Stabilisierungsseil 3 dargestellt. Hier ist eine Ausführungsform gezeigt, bei der vier Leiterseile 2 an einem Stabilisierungsseil 3 aufgehängt bzw. fixiert sind. Dabei kann statt der hochohmigen Verbindungselemente 5 bzw. zusätzlich zu den hochohmigen Verbindungselementen 5 am Aufhängungspunkt 4 (Fig. 1) auch eine hochohmige Ummantelung 7 des Stabilisierungsseils 3 realisiert sein. Das ist in Fig. 3 angedeutet worden. Die hochohmige Ummantelung 7 kann beispielsweise aus Edelstahl bestehen. - Grundsätzlich gibt es eine Vielzahl von Varianten zur Aufhängung eines oder mehrerer Leiterseile 2 an einem Stabilisierungsseil 3 der Freileitungseinrichtung.

## Patentansprüche

1. Freileitungseinrichtung, insbesondere für Hochspannungsfreileitungen, - mit einer Mehrzahl von Masten (1) und mit zwischen den Masten (1) verlaufenden und an den Masten (1) fixierten Leiterseilen (2), wobei zumindest ein zwischen den Masten (1) verlaufendes und an den Masten (1) fixiertes Stabilisierungsseil (3) vorgesehen ist, wobei das Stabilisierungsseil (3) oberhalb zumindest eines Teils der Leiterseile (2) angeordnet ist,
wobei zumindest ein Leiterseil (2) in den Bereichen zwischen zwei Masten (1) jeweils an einer Mehrzahl von Aufhängungspunkten (4) an dem Stabilisierungsseil (3) aufgehängt ist und wobei das Stabilisierungsseil (3) und das zumindest eine Leiterseil (2) das gleiche oder im Wesentlichen das gleiche Potential aufweisen
**dadurch gekennzeichnet dass**
durch ein Leiterseil (2) oder ein Leiterseilbündel ein Strom mit einer Stromstärke fließt, die zumindest 200 mal größer ist, vorzugsweise zumindest 100 mal größer ist als die Stromstärke des durch das Stabilisierungsseil (3) strömenden Stroms.

2. Freileitungseinrichtung nach Anspruch 1, wobei ein Leiterseil (2) an einem Aufhängungspunkt (4) mit zumindest einem Verbindungselement (5) an dem Stabilisierungsseil (3) aufgehängt ist, wobei ein Verbindungselement (5) einen elektrischen Widerstand von 50 bis 200 Milliohm, vorzugsweise von 70 bis 130 Milliohm und besonders bevorzugt von 80 bis 120 Milliohm aufweist.

3. Freileitungseinrichtung nach Anspruch 1, wobei über eine Strecke mit mehreren hintereinander angeordneten Masten (1) bevorzugt lediglich eine elektrische Verbindung zwischen einem Leiterseil (2) und dem Stabilisierungsseil (3) realisiert ist und wobei im Übrigen das Leiterseil (2) an einem Aufhängungspunkt (4) mit zumindest einem Isolator an dem Stabilisierungsseil (3) aufgehängt ist, wobei ein solcher Isolator einen Widerstand von 1.000 Ohm bis 10.000.000 Ohm, vorzugsweise von 800 Ohm bis 1.000.000 Ohm aufweist.

4. Freileitungseinrichtung nach einem der Ansprüche 1 bis 3, wobei der Abstand zwischen zwei Aufhängungspunkten (4) des Leiterseils (2) 5 bis 50 m, vorzugsweise 8 bis 45 m und bevorzugt 8 bis 40 m beträgt.

5. Freileitungseinrichtung nach einem der Ansprüche 1 bis 4, wobei der Durchhang eines Leiterseils (2) zwischen zwei Aufhängungspunkten (4) 20 bis 70 cm, vorzugsweise 25 bis 65 cm und bevorzugt 35 bis 65 cm beträgt.

6. Freileitungseinrichtung nach einem der Ansprüche 1 bis 5, wobei das Stabilisierungsseil (3) als Stahlseil ausgebildet ist.

7. Freileitungseinrichtung nach einem der Ansprüche 1 bis 6, wobei durch das Stabilisierungsseil (3) kein Strom bzw. quasi kein Strom fließt und empfohlenermaßen ein Strom mit einer maximalen Stromstärke von 0,2 bis 20 A, bevorzugt von 1 bis 10 A und sehr bevorzugt von 2 bis 5 A fließt.

8. Freileitungseinrichtung nach einem der Ansprüche 1 bis 7, wobei an einem Stabilisierungsseil (3) eine Mehrzahl von Leiterseilen (2) aufgehängt ist und wobei die Leiterseile (2) dabei übereinander und/oder nebeneinander angeordnet sind.

9. Freileitungseinrichtung nach Anspruch 8, wobei die Mehrzahl der Leiterseile (2) an einem Aufhängungspunkt (4) durch Abstandshalter voneinander getrennt sind bzw. auf Abstand gehalten werden.

10. Freileitungseinrichtung nach einem der Ansprüche 1 bis 9, wobei der Abstand zwischen zwei Masten 200 bis 600 m, insbesondere 250 bis 450 m beträgt.

11. Freileitungseinrichtung nach einem der Ansprüche 1 bis 10, wobei das Stabilisierungsseil (3) mit einer Zugspannung von 700 bis 1.000 N/mm², vorzugsweise von 800 bis 950 N/mm² gespannt ist.

12. Freileitungseinrichtung nach einem der Ansprüche 1 bis 11, wobei der Durchmesser des Stabilisierungsteils 2 bis 10 cm, bevorzugt 2,5 bis 6 cm beträgt.

13. Freileitungseinrichtung nach einem der Ansprüche 1 bis 12, wobei das Stabilisierungsseil (3) das Erdseil der Freileitungseinrichtung ist.

## Claims

1. Overhead transmission line equipment, in particular for high-voltage overhead transmission lines, with a plurality of masts (1), and with conductor cables (2) running between the masts (1), and fixed to the masts (1), wherein at least one stabilisation cable (3) is provided, running between the masts (1), and fixed to the masts (1), wherein the stabilisation cable (3) is arranged above at least a section of the conductor cables (2), wherein at least one conductor cable (2) is suspended from the stabilisation cable (3) at a plurality of suspension points (4) in the regions between two masts (1), and wherein the stabilisation cable (3) and the at least one conductor cable (2) have the same, or essentially the same, potential,
**characterised in that**,
a current flows through a conductor cable (2), or a conductor cable bundle, with a strength that is at least 200 times greater, preferably at least 100 times greater, than the strength of the current flowing through the stabilisation cable (3).

2. The overhead transmission line equipment in accordance with claim 1, wherein a conductor cable (2) is suspended from the stabilisation cable (3) at a suspension point (4) using at least one connecting element (5), wherein a connecting element (5) has an electrical resistance of 50 to 200 milliohms, preferably of 70 to 130 milliohms, and particularly preferably of 80 to 120 milliohms.

3. The overhead transmission line equipment in accordance with claim 1, wherein over a section with a plurality of masts (1) arranged one behind another, preferably just one electrical connection is implemented between a conductor cable (2) and the stabilisation cable (3), and wherein the conductor cable (2) is furthermore suspended from the stabilisation cable (3) at a suspension point (4) with at least one insulator, wherein such an insulator has a resistance of 1,000 ohms to 10,000,000 ohms, preferably of 800 ohms to 1,000,000 ohms.

4. The overhead transmission line equipment in accordance with one of the claims 1 to 3, wherein the distance between two suspension points (4) of the conductor cable (2) is 5 to 50 m, preferably 8 to 45 m, and more preferably 8 to 40 m.

5. The overhead transmission line equipment in accordance with one of the claims 1 to 4, wherein the sag of a conductor cable (2) between two suspension points (4) of the conductor cable (2) is 20 to 70 cm, preferably 25 to 65 cm, and more preferably 35 to 65 cm.

6. The overhead transmission line equipment in accordance with one of the claims 1 to 5, wherein the stabilisation cable (3) is designed as a steel cable.

7. The overhead transmission line equipment in accordance with one of the claims 1 to 6, wherein no current, or virtually no current, flows through the stabilisation cable (3) and as recommended a current flows with a maximum strength of 0.2 to 20 A, preferably of 1 to 10 A, and very preferably of 2 to 5 A.

8. The overhead transmission line equipment in accordance with one of the claims 1 to 7, wherein a plurality of conductor cables (2) is suspended from a stabilisation cable, (3), and wherein the conductor cables (2) are thereby arranged one above another and/or alongside one another.

9. The overhead transmission line device in accordance with claim 8, wherein the plurality of conductor cables (2) are separated from one another at a suspension point (4) by means of spacers, and/or are held at a distance from one another.

10. The overhead transmission line equipment in accordance with one of the claims 1 to 9, wherein the distance between two masts is 200 to 600 m, in particular 250 to 450 m.

11. The overhead transmission line equipment in accordance with one of the claims 1 to 10, wherein the stabilisation cable (3) is tensioned with a tensile stress of 700 to 1,000 N/mm², preferably of 800 to 950 N/mm².

12. The overhead transmission line equipment in accordance with one of the claims 1 to 11, wherein the diameter of the stabilisation cable is 2 to 10 cm, preferably 2.5 to 6 cm.

13. The overhead transmission line equipment in accordance with one of the claims 1 to 12, wherein the stabilisation cable (3) is the earth cable of the overhead transmission line equipment.

## Revendications

1. Installation de lignes aériennes, notamment pour des lignes aérienne haute tension, avec une pluralité de mâts (1) et avec des câbles conducteurs (2) s'étendant entre les mâts (1) et fixés sur les mâts (1), au moins un câble stabilisateur (3) qui s'étend entre les mâts (1) et qui est fixé sur les mâts (1) étant prévu, le câble stabilisateur (3) étant placé au-dessus d'au moins une partie des câbles conducteurs (2),
au moins un câble conducteur (2) étant accroché dans les régions entre deux mâts (1), chaque fois sur une pluralité de points de suspension (4) sur le câble stabilisateur (3) et le câble stabilisateur (3) et l'au moins un câble conducteur (2) présentant le même ou sensiblement le même potentiel,
**caractérisé en ce**
**qu'**à travers un câble conducteur (2) ou un faisceau de câbles conducteurs circule un courant avec une intensité de courant qui est au moins 200 fois plus élevée, de préférence au moins 100 fois plus élevée que l'intensité de courant du courant qui circule à travers le câble stabilisateur (3).

2. Installation de lignes aériennes selon la revendication 1, un câble conducteur (2) étant accroché à un point de suspension (4) avec au moins un élément de liaison (2) au câble stabilisateur (3), un élément de liaison (5) présentant une résistance électrique de 50 à 200 milli-ohms, de préférence de 70 à 130 milli-ohms et de manière particulièrement préférée, de 80 à 120 milli-ohms.

3. Installation de lignes aériennes selon la revendication 1, sur laquelle, sur un trajet comprenant plusieurs mâts (1) placés les uns derrière les autres il n'est de préférence réalisé qu'une seule liaison électrique entre un câble conducteur (2) et le câble stabilisateur (3) et par ailleurs, le câble conducteur (2) est accroché au câble stabilisateur (3) sur un point de suspension (4) avec au moins un isolateur, un tel isolateur présentant une résistance de 1.000 ohms à 10.000.000 ohms, de préférence de 800 ohms à 1.000.000 ohms.

4. Installation de lignes aériennes selon l'une quelconque des revendications 1 à 3, l'écart entre deux points de suspension (4) du câble conducteur (2) étant de 5 à 50 m, de préférence de 8 à 45 m et de manière préférée, de 8 à 40 m.

5. Installation de lignes aériennes selon l'une quelconque des revendications 1 à 4, la flèche d'un câble conducteur (2) entre deux points de suspension (40) étant de 20 à 70 cm, de préférence de 25 à 65 cm et de manière préférée, de 35 à 65 cm.

6. Installation de lignes aériennes selon l'une quelconque des revendications 1 à 5, le câble stabilisateur (3) étant conçu en tant que câble d'acier.

7. Installation de lignes aériennes selon l'une quelconque des revendications 1 à 6, aucun courant ou quasiment aucun courant ne circulant à travers le câble stabilisateur (3) et de manière recommandée, il circule un courant d'une intensité de courant maximale de 0,2 à 20 A, de préférence de 1 à 10A et de manière très préférée de 2 à 5 A.

8. Installation de lignes aériennes selon l'une quelconque des revendications 1 à 7, sur un câble stabilisateur (3) étant accrochée une pluralité de câbles conducteurs (2) et les câbles conducteurs (2) étant placés à cet effet les uns au-dessus des autres et/ou les uns à côté des autres.

9. Installation de lignes aériennes selon la revendication 8, sur un point de suspension, la pluralité des câbles conducteurs (2) étant séparés ou maintenus à un écart les uns des autres par des écarteurs.

10. Installation de lignes aériennes selon l'une quelconque des revendications 1 à 9, l'écart entre deux mâts étant de 200 à 600 m, notamment de 250 à 450 m.

11. Installation de lignes aériennes selon l'une quelconque des revendications 1 à 10, le câble stabilisateur (3) étant tendu avec un effort de tension de 700 à 1.000 N/mm², notamment de 800 à 950 N/mm².

12. Installation de lignes aériennes selon l'une quelconque des revendications 1 à 11, le diamètre du câble stabilisateur étant de 2 à 10 cm, de préférence de 2,5 à 6 cm.

13. Installation de lignes aériennes selon l'une quelconque des revendications 1 à 12, le câble stabilisateur (3) étant le câble de garde de l'installation de lignes aériennes.
